# NOUVEAU FASCICULE DE BREVET EUROPEEN

(11) **EP 3 625 183 B2**
(45) Date de publication et mention de la décision concernant l'opposition: **05.08.2026**
(45) Mention de la délivrance du brevet: 18.10.2023
(21) Numéro de dépôt: 18735359.4
(22) Date de dépôt: 16.05.2018
(51) Int. Cl.: C03C 1/00, C03C 3/085, C03C 10/00

(54) **PROCÉDÉ DE FABRICATION D'UN PRODUIT VERRIER D'ALUMINOSILICATE DE LITHIUM POUR PRODUIT VITROCÉRAMIQUE**
VERFAHREN ZUR HERSTELLUNG EINES LITHIUMALUMINOSILIKATGLASPRODUKTS FÜR GLASKERAMIKPRODUKTE
METHOD FOR MANUFACTURING A LITHIUM ALUMINOSILICATE GLASS PRODUCT FOR GLASS-CERAMIC PRODUCTS

(30) Priorité: 18.05.2017 FR 1754385
(43) Date de publication de la demande: 25.03.2020
(73) Titulaire: Eurokera S.N.C., 02400 Château-Thierry (FR)
(72) Inventeur: COCHARD, Jean-Patrick, 92160 Antony (FR); DI PIERRO, Simonpietro, 60800 Ormoy-Villers (FR); LECOMTE, Emmanuel, 02400 Nesles La Montagne (FR)
(74) Mandataire: Saint-Gobain Recherche
(86) Numéro de dépôt international: PCT/FR2018/051180
(87) Numéro de publication internationale: WO 2018/211216

(56) Documents cités:
- EP-A2- 2 226 303
- EP-A2- 2 226 303
- WO-A1-2013/124240
- FR-A1- 3 025 793
- US-A- 4 192 688
- BACH: "Low Thermal Expansion Glass Ceramics, 2. Auflage", 20 July 2005, SPRINGER, Deutschland, ISBN: 3-540-24111-6, article HANS BACH, DIETER KRAUSE: "Glass Ceramics for Household Appliances", pages: 51 - 119, XP009557737, DOI: 10.1007/3-540-28245-9_3
- "Avalon provides update on Separation Rapids and East Kemptville projects and announces new staff appointment ", AVALON, NEWS RELEASE; NO. 14-06, 27 May 2014 (2014-05-27), XP093196781
- DAKOTA MINERALS: "Project Update -Sepeda Lithium Project, Portugal - For Immediate Release -", 14 November 2016 (2016-11-14), XP055416301, Retrieved from the Internet <URL:https://www.dakotaminerals.com.au/asx-announcements/2016/download-file?path=1616844.pdf> [retrieved on 20171017]

## Description

La présente invention concerne un procédé de fabrication d'un produit verrier d'aluminosilicate de lithium adapté pour la fabrication de produit vitrocéramique. Ledit procédé permet une meilleure fusibilité et un meilleur affinage du mélange de matières premières.

Une vitrocéramique est un matériau composite comprenant une phase amorphe dans laquelle sont dispersés des phases cristallines ou cristaux. Elle est généralement obtenue par le traitement thermique d'un verre, dit « verre mère », afin de faire cristalliser, de manière contrôlée, des cristaux dans son volume. Ce traitement par lequel un verre cristallise partiellement est dit « traitement de céramisation » ou simplement « céramisation ». Les propriétés physico-chimiques finales de la vitrocéramique dépendent de la composition du verre mère et du traitement de céramisation.

Les vitrocéramiques fondées sur le système Al₂O₃-SiO₂-Li₂O contiennent une (des) solution(s) solide(s) de β-quartz et/ou de β-spodumène comme phase(s) cristalline(s) principale(s). Ces vitrocéramiques sont appréciées dans de nombreux domaines pour leurs propriétés physico-chimiques, notamment leur coefficient de dilatation thermique, et leurs qualités esthétiques. Elles sont notamment utilisées dans les dispositifs de cuisson comme plaques de cuisson, vitres de four, ou encore comme inserts de cheminées.

La fabrication des produits vitrocéramiques fondés sur le système Al₂O₃-SiO₂-Li₂O comprend généralement quatre étapes successives :
a. la fusion d'un mélange vitrifiable de matières premières,
b. l'affinage de la matière fondue,
c. le refroidissement de la matière fondue et la mise en forme du verre mère formé, et
d. la céramisation du verre mère par un traitement thermique approprié.

La qualité du produit vitrocéramique dépend de la qualité du verre mère obtenu après les étapes de fusion et d'affinage. Ce verre mère doit notamment être exempt de tout défaut susceptible de dégrader les propriétés physico-chimiques et esthétiques du produit vitrocéramique après l'étape de céramisation. En conséquence, ces deux étapes de fusion et d'affinage doivent être réalisées avec soin. Le mélange de matières premières doit être aussi formulé et les agents d'affinage être sélectionnés de manière à minimiser le nombre de défauts générés. En outre, ils doivent permettre de répondre aux critères définis par les directives européennes visant à réduire les émissions de gaz à effet de serre et la consommation d'énergie relatives aux procédés de fabrication des produits manufacturés (Décision N°406/2009/CE du Parlement européen et du Conseil) ainsi qu'à réduire la toxicité de leurs constituants (Règlement N°1272/2008/CE du Parlement Européen et du Conseil).

L'étape de fusion est une étape de chauffe à haute température d'un mélange de matières premières. Ce mélange comprend plusieurs composés associés selon des proportions établies telles que la composition, exprimée en fractions massiques d'oxydes, corresponde à celle du verre dont l'élaboration est recherchée. Ces composés sont le plus souvent des oxydes, des carbonates, des sulfates et des nitrates. Lorsqu'il est chauffé à une température pouvant atteindre 1700°C, un tel mélange est le siège d'un certain nombre de réactions dont le produit final est un liquide ayant la composition du verre : déshydratation des matières premières, formation de silicates par réactions solide-solide, liquéfaction des carbonates qui réagissent ensuite avec lesdits silicates, décomposition des composés avec libération de gaz (CO₂, NOₓ, O₂, SO₃) sous la forme de bulles, formation d'un liquide et dissolution des composés restant dans ledit liquide.

Les verres mères aluminosilicates de lithium, peuvent contenir 55 à 75% en masse de SiO₂, 12 à 25% en masse de Al₂O₃, et 2 à 5% en masse de Li₂O. Les matières premières naturelles par lesquelles ces trois oxydes sont habituellement apportés sont respectivement le quartz (sable), l'alumine et le carbonate de lithium (Li₂CO₃). L'alumine et le quartz, en raison de leur température de fusion élevée (1670°C (β-tridymite) ou 1713°C (β-cristobalite) pour le quartz, 2054°C pour l'alumine), requièrent des températures de chauffe du mélange de matières premières relativement élevées, et donc d'importantes quantités de combustible. En outre, leurs caractères réfractaires en font des sources récurrentes de défauts dans le verre final, souvent sous la forme de particules non dissoutes. Le carbonate de lithium, outre son coût élevé en raison de la rareté des gisements naturels, est une source importante de dioxyde de carbone.

L'étape d'affinage consiste à favoriser l'ascension des bulles vers la surface du liquide et à évacuer les gaz qu'il contient. Grâce au mouvement des bulles, elle permet également le brassage du liquide afin d'en homogénéiser la composition et de favoriser la dissolution des composés résiduels non fondus. Pour cela, un composé, dit « agent affinant » ou « agent d'affinage », est introduit dans le mélange de matières premières. Il a pour propriété de libérer ou de faire libérer un gaz qui, en entrant dans les bulles de manière à les faire grossir, en favorise l'ascension vers la surface du liquide. Les agents affinant traditionnellement utilisés pour les verres mères d'aluminosilicates de lithium, sont les oxydes d'arsenic et les oxydes d'antimoine. Cependant, en raison de leur toxicité, plusieurs méthodes ont été ou sont développées pour les remplacer.

La plupart de ces méthodes sont fondées sur l'utilisation de l'oxyde d'étain. Or, cet oxyde présente deux inconvénients. Il ne libère de l'oxygène en quantité suffisante qu'à des températures élevées (>1600°C) et sa solubilité dans les verres fondés sur le système Al₂O₃-SiO₂-Li₂O est faible (<~0,6% en poids). Cette faible solubilité ne permet pas de compenser l'insuffisance d'oxygène qui serait libéré à des températures plus faibles que 1600°C. Par conséquent, l'oxyde d'étain est souvent utilisé en combinaison avec d'autres composés afin de favoriser la libération d'oxygène. Ces composés peuvent être, par exemple, des halogénures tels que les chlorures (JP4120897 B2, US6698244 B1), les fluorures (EP1899276 B1, US6698244 B1) ou les bromures (US7456121 B2), des oxydes de métaux de transition tels que les oxydes de cérium et ou de manganèse (WO2007065910 A1, US6698244 B1), ou encore des sulfates (US6698244 B1) ou des nitrates. Cependant, leur utilisation ne fournit pas toujours des résultats satisfaisants. Ils peuvent être volatils, toxiques et corrosifs pour les éléments réfractaires du four, ne pas générer suffisamment de bulles et/ou être responsables d'une coloration non souhaitée du verre mère ou de la vitrocéramique obtenue après le traitement de céramisation

L'état de la technique enseigne que tout ou partie des matières premières habituellement utilisées pour la fabrication de verre mère fondé sur le système le système Al₂O₃-SiO₂-Li₂O, c'est-à-dire le carbonate de lithium, le quartz et l'alumine, peuvent être remplacées avec succès par des aluminosilicates de lithium, tels que la pétalite (feldspath de formule théorique LiAlSi₄O₁₀) ou le spodumène (pyroxène de formule théorique LiAl(SiO₃)₂) - (Haigh & Kingsnortk, The Lithium Minerals Industry, Glass, 1989; Yuan et al. Préparation of spodumene-derived low expansion coefficient glass ceramic in the system Li2O-Al2O3-SiO2, Journal of Wuhan University of Technology, 12(4): 18-24, 1997; EP2226303 ; FR3025793).

L'utilisation de ces deux matières premières permet notamment de réduire les émissions de dioxyde de carbone et d'améliorer la « fusibilité » du mélange de matières premières. Cette amélioration de la fusibilité se manifeste en particulier par la diminution des températures de chauffe du mélange de matières premières en raison des températures de fusion moins élevées du spodumène et de la pétalite (~1350°C et ~1423°C pour la pétalite et le spodumène respectivement), la diminution du nombre de particules non dissoutes, et l'homogénéisation plus rapide de la composition du liquide. Des exemples d'utilisation de pétalite et de spodumène avec l'oxyde d'étain comme agent d'affinage sont décrits dans le document EP2226303 B1.

Dans le domaine technique, les termes « spodumène » et « pétalites » sont souvent utilisés de manière générique pour désigner l'ensemble des minéraux de la classe des spodumènes et des pétalites respectivement. Ils désignent aussi fréquemment, par extension, les roches qui les contiennent majoritairement. Ces roches, qui proviennent de gisements naturels, inhomogènes et formées dans des conditions géologiques différentes, subissent plusieurs transformations et réactions afin d'en extraire les minéraux pétalite et spodumène proprement dits. Ces minéraux sont ensuite utilisés sous la forme de matières premières dans les mélanges pour la fabrication des produits verriers et vitrocéramiques. Il est donc évident qu'en fonction de leur origine, ces matières premières ne sont pas parfaitement stœchiométriques, peuvent présenter des particularités structurales différentes et contenir d'autres éléments en faibles quantités ou en traces. C'est la raison pour laquelle elles sont généralement qualifiées et classées selon les teneurs des différents oxydes et minéraux traces qu'elles contiennent. Le terme « qualité » est couramment employé pour la qualification et la classification.

Dans l'état de la technique, les qualités des matières ne sont généralement pas détaillées. Les termes « spodumène » et « pétalites » sont utilisés de manière générique. En particulier, le document EP2226303 B1 mentionne une pétalite et deux spodumènes dont les qualités ne sont pas décrites. Elles sont utilisées pour élaborer des verres fondés le système SiO₂-Al₂O₃-Li₂O avec de l'oxyde d'étain comme agent d'affinage. Cependant, la température à laquelle l'étape d'affinage est réalisée reste élevée (≥1600°C) et le nombre de particules non dissoutes, bien que réduit par rapport à un mélange de matières premières habituelles, reste élevé (10 à 50%) .

Or, dans le cadre de recherches menées sur la fusibilité et l'affinage des matières fondues pour la fabrication de verres mères dans le système SiO₂-Al₂O₃-Li₂O, il a été constaté que, toutes choses étant égales par ailleurs, la fusibilité et l'affinage d'un mélange de matières premières incorporant de la pétalite varie selon le gisement duquel elle est extraite. En particulier, certaines qualités de pétalite favorisent la fusion et l'affinage.

La présente invention concerne donc un procédé de fabrication d'un produit verrier d'aluminosilicate de lithium permettant une meilleure fusibilité et un meilleur affinage du mélange de matières premières, selon la revendication 1 ledit procédé étant caractérisé en ce que ledit mélange vitrifiable de matières premières comprend de la pétalite ayant une fraction massique en fer total, exprimée en Fe₂O₃, inférieure ou égale à 100ppm, de préférence inférieure ou égale à 50ppm.

Au sens de l'invention, un mélange vitrifiable de matières premières exempt, à l'exception de traces inévitables, d'oxydes d'arsenic et d'oxydes d'antimoine, correspond à un mélange vitrifiable de matières premières dans lequel des oxydes d'arsenic et/ou des oxydes d'antimoine ne sont pas volontairement introduits. Ces oxydes d'arsenic et/ou d'antimoine peuvent être cependant naturellement présents dans les autres matières premières, généralement sous forme de traces, comme par exemple dans un calcin servant de porteur pour les autres éléments du mélange vitrifiable. De préférence, la somme des fractions massiques des oxydes d'arsenic et d'antimoine dans la composition du verre obtenu à partir du mélange vitrifiable de matières premières est égale ou inférieur à 1000ppm.

Le terme « pétalite » désigne toute matière première, brute ou traitée, susceptible de servir à former ledit mélange vitrifiable de matières premières, et dans laquelle le minéral pétalite proprement dit est majoritaire, c'est-à-dire dont la fraction massique est supérieure ou égale à 50%.

Le minéral pétalite a pour formule chimique théorique LiAlSi₄O₁₀. Toutefois, il n'est pas rare que le minéral naturel pétalite ne puisse pas être exprimé parfaitement selon cette formule théorique. Surtout, s'il est d'origine naturelle, les teneurs en éléments Li, Al, Si et O formant ledit minéral peuvent légèrement varier. Il peut en outre contenir d'autres éléments en traces. Par conséquent, de manière générale, un minéral doit être considéré comme un minéral pétalite si les teneurs relatives entre les dits éléments Li, Al, Si et O sont comparables à ceux eux exprimés dans la formule théorique LiAlSi₄O₁₀ et si ses propriétés cristallographiques satisfont celles définies dans le groupe 72.06.01.01 de la classification de Dana, c'est-à-dire que son système cristallin est monoclinique, son groupe d'espace est P2/a et son groupe ponctuel de symétrie est 2/m selon la notation de Hermann-Mauguin. Par exemple, le minéral naturel, Li_{0.92}Al_{0.99}Si_{3.99}O₁₀, est un minéral pétalite (Anthony J W, Bideaux R A, Bladh K W, and Nichols M C (1990) Handbook of Mineralogy, Mineral Data Publishing, USA). La formule théorique LiAlSi₄O₁₀ ou l'expression « minéral pétalite » désigne donc indifféremment le minéral pétalite selon ladite définition.

La fraction massique de ladite pétalite dans ledit mélange vitrifiable de matières premières est au moins 50%, notamment au moins 70%, en particulier au moins 80%, de préférence au moins 90%. Plus cette fraction massique sera élevée, plus la fusibilité et l'affinage du mélange de matières premières sera améliorée. Cela se manifestera notamment par une diminution du nombre de particules non dissoutes, et une homogénéisation plus rapide de la composition du liquide.

En outre, ladite pétalite pourra comprendre une fraction massique du minéral pétalite supérieure ou égale à 90%. Plus la matière première pétalite sera enrichie en minéral pétalite, moins elle sera une source potentielle d'éléments non désirés et de phases minérales dont la température de fusion trop élevée serait susceptible de ne pas en permettre la fusion complète à la température à laquelle le procédé de l'invention sera mise en oeuvre. La fusibilité et l'affinage du mélange de matières premières seront ainsi améliorés.

Selon la teneur en pétalite que contient le mélange vitrifiable de matières premières, la température d'affinage de l'étape b du procédé de l'invention pourra être au plus 1700°C, en particulier au plus 1600°C, de préférence au plus 1550°C. La réduction de la température d'affinage permet de réduire l'énergie consommée par le procédé de l'invention, et donc la quantité de combustible nécessaire à la génération de cette énergie.

La fusibilité et l'affinage du mélange vitrifiable de matières premières sont d'autant plus améliorés que la fraction massique en fer total, exprimée en Fe₂O₃, de la pétalite est davantage réduite. Elle est inférieure ou égale à 100ppm, de préférence inférieure ou égale à 50ppm.

Elle pourra être supérieure ou égale à 10ppm, notamment supérieure ou égale à 20ppm. La fraction massique de fer total, exprimée en Fe₂O₃, du mélange vitrifiable de matières premières est comprise entre 4ppm et 200ppm.

Toujours dans l'objectif d'améliorer l'affinage du mélange vitrifiable de matières premières, ledit mélange comprend un ou plusieurs agents affinant choisis parmi SnO₂, CeO₂, MnO₂, les fluorures et les chlorures. Leurs teneurs pourront être adaptés selon la quantité de pétalite que ledit mélange vitrifiable comprend et selon la teneur en fer, exprimée en Fe₂O₃, de ladite pétalite. Lorsque l'agent affinant est le dioxyde d'étain, SnO₂, sa fraction massique dans le verre final pourra être moins de 0,5%, en particulier comprise entre 0,1% et 0,4%. Pour les mêmes raisons, le mélange de matières premières peut comprendre des nitrates d'alcalins ou d'alcalino-terreux dont la fraction massique dans le mélange vitrifiable sera au plus 4%.

Ladite pétalite pourra aussi naturellement contenir une certaine quantité de fluor. La fraction massique de fluor contenu dans ladite pétalite sera alors supérieure ou égale à 0,10%. Il a été constaté que lorsque la pétalite contient du fluor l'affinage du mélange vitrifiable de matières premières est amélioré par rapport à un mélange vitrifiable dans lequel la pétalite ne contiendrait pas de fluor et dans lequel ledit fluor serait apporté par une autre matière première.

Afin de fabriquer un verre selon le procédé de l'invention, les proportions des différentes matières premières comprises dans le mélange vitrifiables devront être établies telles que la composition, exprimée en fractions massiques d'oxydes, corresponde à celle du verre dont l'élaboration est recherchée. Le verre obtenu comprend de préférence les constituants suivants dans les limites définies ci-après exprimées en fractions massiques.

| | |
|---|---|
| SiO₂ | 52-75%, |
| Al₂O₃ | 12-27%, |
| Li₂O | 2-6%, |
| Na₂O | 0-3%, |
| K₂O | 0-3%, |
| CaO | 0-5%, |
| MgO | 0-5%, |
| SrO | 0-5%, |
| BaO | 0-5%, |
| ZnO | 0-5%, |
| TiO₂ | 1-6%, |
| ZrO₂ | 0-3%, |
| P₂O₅ | 0-8%. |

La proportion de chacun des oxydes doivent être ajustée en fonction des propriétés physico-chimiques recherchées pour le verre mère et le produit vitrocéramique qui sera susceptible d'être produit à partir de celui-ci. Afin de fabriquer ledit produit vitrocéramique, le procédé de l'invention pourra comprendre en outre une étape de céramisation.

L'étape de céramisation à laquelle pourra être soumis un verre ayant une composition telle qu'indiquée précédemment est requis pour former le (les) solution(s) solide(s) de β-quartz et/ou de β-spodumène comme phase(s) cristalline(s) principale(s). Cette étape comprend plusieurs traitements thermiques successifs à des températures et pour des durées différentes. Ces traitements sont généralement réalisés :
- entre 650 et 850°C, pendant 15 minutes à 4 heures, pour la germination desdites phases cristallines, et
- entre 860 et 950°C, pendant 10 minutes à 2 heures, pour la croissance desdites phases cristallines.

Les propriétés physico-chimiques et optiques finales du produit vitrocéramique dépendront de la composition du verre mère et des paramètres de l'étape de céramisation. Cette composition et ces paramètres devront donc être adaptés selon les applications souhaitées du produit vitrocéramique.

Le procédé de l'invention peut aussi être avantageusement mis en oeuvre dans la fabrication de produits vitrocéramiques colorées. Ces produits pourront alors être colorés à l'aide d'un oxyde ou plusieurs oxydes choisis parmi CoO, Cr₂O₃, MnO₂, NiO, V₂O₅, et CeO₂.

Les produits vitrocéramiques susceptibles d'être obtenus par le procédé de l'invention, lorsqu'il comprend en outre une étape de céramisation, peuvent être utilisés dans les dispositifs de cuisson, tels que plaques de cuisson, vitres de four, ou encore comme inserts de cheminées ou de vitrage de protection contre l'incendie.

### Exemple 1

Les avantages du procédé de l'invention sont parfaitement illustrés par un premier exemple non limitatif décrit ci-après dans lequel sont comparés trois verres mères de même composition chimique nominale dont l'un est fabriqué selon un mode de réalisation du procédé de l'invention et les deux autres selon deux procédés de l'état de la technique.

Le premier procédé de l'état de la technique est un procédé de référence dans lequel les oxydes Li₂O, SiO₂ et Al₂O₃ sont apportés dans le mélange de matières premières sous la forme de carbonate de lithium, de silice et d'alumine respectivement. Dans ledit mode de réalisation du procédé de l'invention, ces trois oxydes sont apportés sous forme d'alumine et de pétalite Q1. Dans le second procédé de l'état de la technique, ils sont apportés sous forme d'alumine et de pétalite Q2. La table 1, ci-après, indique les masses de matières premières composant les trois mélanges vitrifiables, M1, M2 et M3 selon chacun de ces procédés respectivement. Chaque mélange contient de l'oxyde d'étain comme agent affinant dans les mêmes proportions. La composition chimique nominale du verre mère susceptible d'être obtenu à partir de ces trois mélanges vitrifiables est indiquée dans la table 2 ci-après.

**Table 1. Masses des matières premières (en gramme) des exemples de mélanges vitrifiables du procédé de l'invention (M2) et des procédés de l'état de la technique (M1 et M3).**

| | **M1** | **M2** | **M3** |
|---|---|---|---|
| **Silice** | 631,10 | - | - |
| **Alumine** | 223,63 | 90,49 | 85,50 |
| **Carbonate de lithium** | 95,04 | 7,2 | 5,00 |
| **Nitrate de baryum** | 33,17 | 33,17 | 33,20 |
| **Dioxyde de titane** | 17,48 | 17,63 | 17,60 |
| **Zircon** | 32,28 | 32,28 | 32,30 |
| **Oxyde de zinc** | 15,47 | 15,47 | 15,50 |
| **Dioxyde d'étain** | 3,37 | 3,37 | 3,40 |
| **Nitrate de sodium** | 14,90 | 6,50 | 7,80 |
| **Oxyde magnésium** | 5,13 | 4,70 | 4,80 |
| **Carbonate de potassium** | 3,72 | - | 21,50 |
| **Carbonate de calcium** | 23,47 | 23,47 | - |
| **Pétalite Q1** | - | 800,40 | - |
| **Pétalite Q2** | - | - | 811,00 |
| **Total** | 1098,76 | 1034,68 | 1037,60 |

**Table 2. Composition chimique nominale, exprimée en fraction massique d'oxydes, du verre mère susceptible d'être obtenu à partir des mélanges vitrifiables M1, M2 et M3 de la table 1.**

| **SiO₂** | **Al₂O₃** | **MgO** | **Na₂O** | **K₂O** | **BaO** | **TiO₂** | **ZnO** | **Li₂O** | **ZrO₂** | **SnO** |
|---|---|---|---|---|---|---|---|---|---|---|
| 67,80 | 20,11 | 1,24 | 0,15 | 0,19 | 0,80 | 2,61 | 1,61 | 3,47 | 1,71 | 0,30 |

Les compositions chimiques des pétalites Q1 et Q2, exprimées en fractions massiques d'oxydes, et les proportions des phases minérales, exprimées en fractions massiques, que ces deux pétalites contiennent sont indiquées respectivement dans les tables 3 et 4 ci-après. Les compositions chimiques ont été obtenues par analyse chimique en voie humide. Les proportions des phases minérales ont été calculées par quantification, selon la méthode d'affinement Rietvelt, des diffractogrammes obtenus par diffraction des rayons X.

**Table 3. Compositions chimiques, en fractions massiques d'oxydes, des deux pétalites exemples, Pétalite Q1 et Pétalite Q2. La pétalite Q1 est mise en oeuvre dans le procédé de l'invention, la Pétalite Q2 dans le procédé de l'état de la technique.**

| | **Pétalite Q1** | **Pétalite Q2** |
|---|---|---|
| **Al₂O₃** | 16,604 | 16,911 |
| **Fe₂O₃** | 0,009 | 0,071 |
| **Li₂O** | 4,238 | 4,435 |
| **SiO₂** | 79,149 | 78,582 |

**Table 4. Proportions des phases minérales, exprimées en fractions massiques, contenues dans deux pétalites exemples, Pétalite Q1 et Pétalite Q2. La pétalite Q1 est mise en oeuvre dans le procédé de l'invention, la Pétalite Q2 dans le procédé de l'état de la technique. (Erreur : ±1%)**

| | **Pétalite Q1** | **Petalite Q2** |
|---|---|---|
| **Mineral Petalite** | 91,1 | 87,8 |
| **Quartz** | 3,8 | 5,4 |
| **Albite** | 2,6 | 3,6 |
| **Microcline** | 2,5 | - |
| **Spodumene** | - | 3,2 |

La pétalite Q1 et la pétalite Q2 sont, en termes de composition, très similaires. Les teneurs en quartz et en albite sont comparables dans les barres d'erreur (±1%). Ces deux pétalites différent donc essentiellement par la quantité de fer totale, exprimée en Fe₂O₃ : 0,009% (90ppm) pour la pétalite Q1 et 0,071% (710ppm) pour la pétalite Q2.

Afin de comparer la fusibilité et l'affinage des trois mélanges vitrifiables de la table 1, ceux-ci ont fait l'objet d'un test de fusibilité et d'affinage selon le protocole suivant.

Après avoir été placés respectivement dans des creusets en platine, les mélanges ont été chauffés à 1550°C ou 1500°C pendant 4 heures, refroidis à l'air avec un palier de maintien à 750°C pendant 2h. Ensuite, les matières fondues puis refroidies correspondant à chaque mélange vitrifiable ont été extraites et découpées sous la forme de lames d'une épaisseur de 4mm. Les deux faces de chacune des lames ont été polies mécaniquement. Six lames polies échantillons, trois pour chaque température, ont ainsi été obtenues.

La fusibilité et l'affinage ont été évalués en mesurant la fraction surfacique de défauts (bulles et particules non dissoutes) présents dans chacune desdites lames. Pour cela, des micrographies optiques de chacune des six lames ont été acquises à l'aide d'un microscope optique adapté. Sur des micrographies en niveaux de gris, les défauts apparaissent plus sombres que la matière fondue, aussi peuvent-ils être discriminés par l'aide d'une méthode d'analyse d'image par seuillage. Leur fraction surfacique est alors calculée en mesurant la surface couverte par les défauts sur les micrographies transformées par la dite méthode d'image et en rapportant cette surface sur la surface totale. Les résultats sont regroupés dans la table 5 ci-dessous.

**Table 5. Fractions surfaciques de défauts (bulles et particules non dissoutes) présents dans les lames de matière fondue obtenues à partir des mélange de matières premières M1, M2 et M3 de la table 1 après deux tests de fusibilité et d'affinage réalisés pendant 4 heures à 1550°C et 1500°C respectivement.**

| | **M1** | **M2** | **M3** |
|---|---|---|---|
| **1550°C - 4h** | 10,5% | 9,3% | 45,5% |
| **1500°C - 4h** | 24,5% | 30,2% | - |

En comparant les données de la table 5 pour les mélanges vitrifiables M1 et M2 correspondant respectivement au procédé de référence de l'état de la technique dans lequel le carbonate de lithium, l'alumine et la silice sont utilisés, et au procédé de l'invention dans lequel la pétalite Q1 est utilisée, il apparait que les proportions de défauts sont sensiblement comparables pour les verres mères obtenus à 1550°C, et qu'à 1500°C la proportion de défauts dans le verre mère obtenu par le procédé de l'invention est légèrement plus élevée. Par rapport au mélange M3 correspondant à un second procédé de l'état de la technique dans lequel la pétalite Q2 est utilisée, cette proportion est 2 à 5 fois plus faible à 1500°C. En conséquence, ces résultats démontrent clairement que le procédé de l'invention améliore la fusibilité et l'affinage du mélange vitrifiable de matières premières pour la fabrication d'un produit verrier à partir duquel un produit vitrocéramique est susceptible d'être obtenu.

### Exemple 2

Les avantages du procédé de l'invention sont parfaitement illustrés par un deuxième exemple non limitatif décrit ci-après dans lequel sont comparés deux verres mères de même composition chimique nominale dont l'un est fabriqué selon un mode de réalisation du procédé de l'invention et l'autre selon un procédé de l'état de la technique.

Le procédé de l'état de la technique est un procédé de référence dans lequel les oxydes Li₂O, SiO₂ et Al₂O₃ sont apportés dans le mélange de matières premières sous forme d'alumine, de silice et de pétalite Q2. Dans le mode de réalisation du procédé de l'invention, ces trois oxydes sont apportés sous forme d'alumine et de pétalite Q3. La table 6, ci-après, indique les masses de matières premières composant les deux mélanges vitrifiables, M4 et M5 selon chacun de ces deux procédés respectivement. La fraction massique de pétalite dans chacun des mélanges vitrifiables M4 et M5 est supérieure à 80%. Chaque mélange contient de l'oxyde d'étain comme agent affinant dans les mêmes proportions. La composition chimique nominale du verre mère susceptible d'être obtenu à partir de ces deux mélanges vitrifiables est indiquée dans la table 7 ci-après.

**Table 6. Masses des matières premières (en gramme) des exemples de mélanges vitrifiables du procédé de l'invention (M5) et du procédé de l'état de la technique (M4).**

| | **M4** | **M5** |
|---|---|---|
| **Silice** | 17,85 | |
| **Alumine** | 80,63 | 78,01 |
| **Dioxyde de titane** | 22,22 | 22,22 |
| **Zircon** | 11,75 | 11,75 |
| **Oxyde de zinc** | 13,4 | 13,4 |
| **Dioxyde d'étain** | 4,1 | 4,1 |
| **Nitrate de sodium** | 1,25 | 7,5 |
| **Carbonate de potassium** | 11 | 12,1 |
| **Carbonate de calcium** | 7 | 9 |
| **Pétalite Q2** | 845 | - |
| **Pétalite Q3** | - | 860,4 |
| **Total** | 1014,2 | 1018,48 |

**Table 7. Composition chimique nominale, exprimée en fraction massique d'oxydes, du verre mère susceptible d'être obtenu à partir des mélanges vitrifiables M4 et M5 de la table 6.**

| **SiO₂** | Al₂O₃ | **CaO** | **Na₂O** | **K₂O** | **TiO₂** | **ZnO** | Li₂O | **ZrO₂** | **SnO₂** |
|---|---|---|---|---|---|---|---|---|---|
| 67,7 | 22,0 | 0,5 | 0,4 | 1,0 | 2,2 | 1,3 | 3,7 | 0,8 | 0,4 |

Les compositions chimiques des pétalites Q2 et Q3, exprimées en fractions massiques d'oxydes sont indiquées dans la table 8 ci-après. Les compositions chimiques ont été obtenues par analyse chimique en voie humide.

**Table 8. Compositions chimiques, en fractions massiques d'oxydes, des deux pétalites exemples, Pétalite Q2 et Pétalite Q3. La pétalite Q3 est mise en oeuvre dans le procédé de l'invention, la Pétalite Q2 dans le procédé de l'état de la technique.**

| | **Pétalite Q2** | **Pétalite Q3** |
|---|---|---|
| **Al₂O₃** | 16.911 | 16,817 |
| **Fe₂O₃** | 0.071 | 0,007 |
| **Li₂O** | 4.435 | 4,330 |
| **SiO₂** | 78.582 | 78,846 |

La pétalite Q2 et la pétalite Q3 sont, en termes de composition, très similaires et différent essentiellement par la quantité de fer totale, exprimée en Fe₂O₃ : 0.007% (70ppm) pour la pétalite Q3 et 0.071% (710ppm) pour la pétalite Q2.

Afin de comparer l'affinage des deux mélanges vitrifiables de la table 6, ceux-ci ont fait l'objet d'un test d'élaboration et d'affinage selon le protocole suivant.

Après avoir été placés respectivement dans des creusets en platine, les mélanges ont été chauffés à des températures comprises entre 1500°C et 1600°C pendant une durée comprise entre 2 heures et 4 heures, refroidis à l'air avec un palier de maintien à 710°C pendant 1 heure. Ensuite, les matières fondues puis refroidies correspondant à chaque mélange vitrifiable ont été extraites et découpées sous la forme d'un cylindre de 2 cm de diamètre et d'environ 2 cm de hauteur. Six échantillons cylindriques, un pour chaque mélange et chaque cycle d'élaboration, ont ainsi été obtenus.

L'affinage a été évalué en mesurant la fraction volumique de bulles et la distribution en taille des bulles présentes dans chaque cylindre. Pour cela, chaque cylindre a fait l'objet d'une analyse par tomographie à rayons X à l'aide d'un homographe EasyTom 150. La puissance du générateur de rayons X a été fixée à 8W. La vitesse d'acquisition a été fixée à 3 images par seconde. La résolution latérale, appelée également taille de voxel, a été fixée à 13pm. La reconstruction du volume à partir des coupes radiographiques a été réalisée à l'aide du logiciel Avizo de la société FEI/Thermo Scientific. La fraction volumique de bulles et la distribution en taille des bulles ont été calculées à l'aide du même logiciel Avizo par une méthode de seuillage.

Les valeurs des fractions volumiques de bulles présentes dans chaque cylindre sont regroupées dans la table 9 ci-après. Les distributions en taille des bulles présentes dans chaque cylindre sont regroupées dans la table 10 ci-après.

**Table 9. Fractions volumiques de bulles présentes dans les cylindres de matière fondue obtenus à partir des mélanges de matières premières M4 et M5 de la table 6.**

| | **M4** | **M5** |
|---|---|---|
| **1550°C** - **2h** | 0,81 | 0,43 |
| **1550°C** - **4h** | 0,26 | 0,15 |
| **1600°C** - **2h** | 0,28 | 0,18 |

**Table 10. Distributions en taille des bulles présentes dans les cylindres de matière fondue obtenus à partir des mélanges de matières premières M4 et M5 de la table 6. Les distributions sont exprimées en proportions volumiques relatives selon quatre intervalles de diamètre de bulles.**

| **Diamètre des bulles** | | <100µm | 100-200µm | 200-300µm | >300µm |
|---|---|---|---|---|---|
| **1550°C** - **2h** | M4 | 50,7% | 32,3% | 12,4% | 4,6% |
| | M5 | 47,8% | 32,9% | 12,4% | 6,8% |
| **1550°C** - **4h** | M4 | 71,6% | 21,6% | 5,8% | 1,1% |
| | M5 | 49,3% | 38,0% | 10,8% | 1,9% |
| **1600°C** - **2h** | M4 | 93,9% | 5,0% | 0,9% | 0,2% |
| | M5 | 81,0% | 14,2% | 4,0% | 0,8% |

En comparant les données de la table 9 pour les mélanges vitrifiables M4 et M5, il apparait clairement que la fraction volumique de bulles est plus faible dans les cylindres obtenus avec le procédé de l'invention. D'autre part, les données de la table 10 montrent que les proportions de bulles dont les tailles sont plus importantes sont plus élevées dans les cylindres obtenus à l'aide du procédé de l'invention. Une proportion plus importante de bulles de grande taille correspond à un état d'affinage plus avancé. Le procédé de l'invention permet donc d'obtenir plus rapidement l'affinage d'un mélange vitrifiable de matières premières pour la fabrication d'un produit verrier à partir duquel un produit vitrocéramique est susceptible d'être obtenu.

### Exemple 3

Les avantages du procédé de l'invention sont parfaitement illustrés par un troisième exemple non limitatif décrit ci-après dans lequel sont comparés deux verres mères de même composition chimique nominale dont l'un est fabriqué selon un mode de réalisation du procédé de l'invention et l'autre selon un procédé de l'état de la technique.

Le procédé de l'état de la technique est un procédé de référence dans lequel les oxydes Li₂O, SiO₂ et Al₂O₃ sont apportés dans le mélange de matières premières sous forme d'alumine, de silice et de pétalite Q2. Dans le mode de réalisation du procédé de l'invention, ces trois oxydes sont apportés sous forme d'alumine, de silice et de pétalite Q1. La table 11, ci-après, indique les masses de matières premières composant les deux mélanges vitrifiables, M6 et M7 selon chacun de ces deux procédés respectivement. La fraction massique de pétalite dans chacun des mélanges vitrifiables M6 et M7 est de 50%. Chaque mélange contient de l'oxyde d'étain comme agent affinant dans les mêmes proportions. La composition chimique nominale du verre mère susceptible d'être obtenu à partir de ces deux mélanges vitrifiables est indiquée dans la table 12 ci-après.

**Table 11. Masses des matières premières (en gramme) des exemples de mélanges vitrifiables du procédé de l'invention (M7) et du procédé de l'état de la technique (M6).**

| | **M6** | **M7** |
|---|---|---|
| **Silice** | 235,6 | 233,7 |
| **Alumine** | 142,55 | 144,3 |
| **Carbonate de lithium** | 47,7 | 50,7 |
| **Nitrate de Baryum** | 20,23 | 20,23 |
| **Dioxyde de titane** | 27,9 | 27,9 |
| **Zircon** | 26,85 | 26,85 |
| **Oxyde de zinc** | 1,95 | 1,95 |
| **Dioxyde d'étain** | 3,06 | 3,1 |
| **Oxyde de magnésium** | 3 | 3 |
| **Carbonate de potassium** | 8,75 | 4,69 |
| **Carbonate de calcium** | 6,5 | 7,5 |
| **Pétalite Q1** | - | 524 |
| **Pétalite Q2** | 525 | - |
| **Total** | 1049,1 | 1047,9 |

**Table 12. Composition chimique nominale, exprimée en fraction massique d'oxydes, du verre mère susceptible d'être obtenu à partir des mélanges vitrifiables M6 et M7 de la table 11.**

| **SiO₂** | **Al₂O₃** | **CaO** | **MgO** | **Li₂O** | **Na₂O** | **K₂O** | **TiO₂** | **ZrO₂** | **BaO** | **ZnO** | **SnO₂** |
|---|---|---|---|---|---|---|---|---|---|---|---|
| 65,03 | 22,72 | 0,43 | 0,31 | 4,18 | 0,26 | 0,75 | 2,77 | 1,83 | 1,22 | 0,19 | 0,3 |

Les compositions chimiques des pétalites Q1 et Q2, exprimées en fractions massiques d'oxydes sont identiques à celles de l'exemple 1 et indiquées dans la table 3.

Afin de comparer l'affinage des deux mélanges vitrifiables de la table 11, ceux-ci ont fait l'objet d'un test d'élaboration et d'affinage selon le protocole suivant.

Après avoir été placés respectivement dans des creusets en platine, les mélanges ont été chauffés à des températures comprises entre 1500°C et 1650°C pendant une durée comprise entre 2 heures et 4 heures, refroidis à l'air avec un palier de maintien à 710°C pendant 1 heure. Ensuite, les matières fondues puis refroidies correspondant à chaque mélange vitrifiable ont été extraites et découpées sous la forme d'un cylindre de 2 cm de diamètre et d'environ 2 cm de hauteur. Six échantillons cylindriques, un pour chaque mélange et chaque cycle d'élaboration, ont ainsi été obtenus.

L'affinage a été évalué en mesurant la fraction volumique de bulles présentes dans chaque cylindre. Pour cela, chaque cylindre a fait l'objet d'une analyse par tomographie à rayons X à l'aide d'un homographe EasyTom 150. La puissance du générateur de rayons X a été fixée à 8W. La vitesse d'acquisition a été fixée à 3 images par seconde. La résolution latérale, appelée également taille de voxel, a été fixée à 13pm. La reconstruction du volume à partir des coupes radiographiques a été réalisée à l'aide du logiciel Avizo de la société FEI/Thermo Scientific. La fraction volumique de bulles a été calculée à l'aide du même logiciel Avizo par une méthode de seuillage.

Les valeurs des fractions volumiques de bulles présentes dans chaque cylindre sont regroupées dans la table 13 ci-après.

**Table 13. Fractions volumiques de bulles présentes dans les cylindres de matière fondue obtenus à partir des mélanges de matières premières M4 et M5 de la table 11.**

| | **M6** | **M7** |
|---|---|---|
| **1550°C - 4h** | 0,17 | 0,12 |
| **1600°C - 2h** | 0,43 | 0,11 |
| **1650°C - 2h** | 0,03 | 0,02 |

En comparant les données de la table 13 pour les mélanges vitrifiables M6 et M7, il apparait que la fraction volumique de bulles est plus faible dans les cylindres obtenus avec le procédé de l'invention. Ces résultats démontrent que le procédé de l'invention améliore l'affinage du mélange vitrifiable de matières premières pour la fabrication d'un produit verrier à partir duquel un produit vitrocéramique est susceptible d'être obtenu.

## Revendications

1. Procédé de fabrication d'un produit verrier d'aluminosilicate de lithium comprenant les étapes suivantes :
a. la fusion d'un mélange vitrifiable de matières premières,
b. l'affinage de la matière fondue,
c. le refroidissement de la dite matière fondue de manière à former un verre,
d. la mise en forme dudit verre,
ledit procédé étant **caractérisé en ce que** ledit mélange vitrifiable de matières premières comprend de la pétalite ayant une fraction massique en fer total, exprimée en Fe₂O₃, inférieure ou égale à 100ppm, de préférence inférieure ou égale à 50ppm, **en ce que** la fraction massique de fer total, exprimée en Fe₂O₃, du mélange vitrifiable de matières premières est comprise entre 4ppm et 200ppm, **en ce que** ledit mélange vitrifiable de matières premières comprend un ou plusieurs agents affinant choisis parmi SnO₂, CeO₂, MnO₂, les fluorures et les chlorures, et **en ce que** la fraction massique de ladite pétalite dans ledit mélange vitrifiable de matières premières est au moins 50%.

2. Procédé selon la revendication 1, tel que le mélange de matières vitrifiables est exempt, à l'exception de traces inévitables, d'oxydes d'arsenic et d'oxydes d'antimoine.

3. Procédé selon l'une quelconque des revendications précédentes, tel que la température d'affinage de l'étape b est au plus 1700°C, en particulier au plus 1600°C, de préférence au plus 1550°C.

4. Procédé selon l'une quelconque des revendications précédentes, tel que la fraction massique de ladite pétalite dans ledit mélange vitrifiable de matières premières est au moins 70%, en particulier au moins 80%, de préférence au moins 90%.

5. Procédé selon l'une quelconque des revendications précédentes, tel que ladite pétalite comprend du minéral pétalite en une fraction massique supérieure ou égale à 90%.

6. Procédé selon l'une quelconque des revendications précédentes, tel que ladite pétalite a une fraction massique en fluor supérieure ou égale à 0,10%.

7. Procédé selon l'une quelconque des revendications précédentes, tel que le mélange de matières premières comprend des nitrates d'alcalins ou d'alcalino-terreux en une fraction massique d'au plus 4%.

8. Procédé selon l'une quelconque des revendications précédentes, tel que ledit agent affinant est SnO₂, la fraction massique dudit SnO₂ dans le verre final est moins de 0,5%, en particulier compris entre 0,4% et 0,1%.

9. Procédé selon l'une quelconque des revendications précédentes, tel que le verre obtenu comprend les constituants suivants dans les limites définies ci-après exprimées en fractions massiques :
| | |
|---|---|
| SiO₂ | 52-75% |
| Al₂O₃ | 12-27% |
| Li₂O | 2-5,5% |
| Na₂O | 0-3%, |
| K₂O | 0-3%, |
| CaO | 0-5%, |
| MgO | 0-5%, |
| SrO | 0-5%, |
| BaO | 0-5%, |
| ZnO | 0-5%, |
| TiO₂ | 1-6%, |
| ZrO₂ | 0-3%, |
| P₂O₅ | 0-8%. |

10. Procédé selon l'une quelconque des revendications précédentes, tel qu'il comprend en outre une étape de céramisation e).

## Patentansprüche

1. Verfahren zum Herstellen eines Lithiumaluminosilicat-Glaserzeugnisses, umfassend die folgenden Schritte:
a. Schmelzen einer verglasbaren Mischung von Rohmaterialien,
b. Läutern des geschmolzenen Materials,
c. Abkühlenlassen des geschmolzenen Materials, um ein Glas auszubilden,
d. Formen des Glases,
wobei das Verfahren **dadurch gekennzeichnet ist, dass** die verglasbare Mischung von Rohmaterialien Petalit, das einen Massenanteil an Gesamteisen, ausgedrückt als Fe₂O₃, von kleiner als oder gleich 100 ppm, vorzugsweise kleiner als oder gleich 50 ppm, aufweist, umfasst, **dadurch, dass** der Massenanteil an Gesamteisen, ausgedrückt als Fe₂O₃, der verglasbaren Mischung von Rohmaterialien zwischen 4 ppm und 200 ppm liegt, **dadurch, dass** die verglasbare Mischung von Rohmaterialien ein oder mehrere Läutermittel umfasst, die aus SnO₂, CeO₂, MnO₂, Fluoriden und Chloriden ausgewählt sind, **und dadurch, dass** der Massenanteil des Petalits in der verglasbaren Mischung von Rohmaterialien mindestens 50 % beträgt.

2. Verfahren nach Anspruch 1, wobei die Mischung von verglasbaren Materialien frei von Arsenoxiden und Antimonoxiden, mit Ausnahme von unvermeidbaren Spuren, ist.

3. Verfahren nach einem der vorstehenden Ansprüche, wobei die Temperatur der Läuterung von Schritt b höchstens 1700 °C, insbesondere höchstens 1600 °C, vorzugsweise höchstens 1550 °C, beträgt.

4. Verfahren nach einem der vorstehenden Ansprüche, wobei der Massenanteil des Petalits in der verglasbaren Mischung von Rohmaterialien mindestens 70 %, insbesondere mindestens 80 %, vorzugsweise mindestens 90 %, beträgt.

5. Verfahren nach einem der vorstehenden Ansprüche, wobei das Petalit Petalitmineral in einem Massenanteil von mehr als oder gleich 90 % umfasst.

6. Verfahren nach einem der vorstehenden Ansprüche, wobei das Petalit einen Fluormassenanteil von mehr als oder gleich 0,10 % umfasst.

7. Verfahren nach einem der vorstehenden Ansprüche, wobei die Mischung von Rohmaterialien Alkali- oder Erdalkalinitrate in einem Massenanteil von höchstens 4 % umfasst.

8. Verfahren nach einem der vorstehenden Ansprüche, wobei das Läuterungsmittel SnO₂ ist, wobei der Massenanteil des SnO₂ in dem Endglas weniger als 0,5 %, insbesondere zwischen 0,4 % und 0,1 % liegt, beträgt.

9. Verfahren nach einem der vorstehenden Ansprüche, wobei das erhaltene Glas die folgenden Bestandteile innerhalb der nachstehend definierten Grenzen, ausgedrückt in Massenanteilen, umfasst:
| | |
|---|---|
| SiO₂ | 52-75 % |
| Al₂O₃ | 12-27 % |
| Li₂O | 2-5,5 % |
| Na₂O | 0-3 %, |
| K₂O | 0-3 %, |
| CaO | 0-5 %, |
| MgO | 0-5 %, |
| SrO | 0-5 %, |
| BaO | 0-5 %, |
| ZnO | 0-5 %, |
| TiO₂ | 1-6 %, |
| ZrO₂ | 0-3 %, |
| P₂O₅ | 0-8 %. |

10. Verfahren nach einem der vorstehenden Ansprüche, wobei es ferner einen Keramisierungsschritt e) umfasst.

## Claims

1. A method of manufacturing a lithium aluminosilicate glass product comprising the following steps:
a. melting a vitrifiable mixture of raw materials,
b. refining the molten material,
c. cooling said molten material so as to form a glass,
d. forming of said glass,
said method being **characterized in that**:
- said vitrifiable mixture of raw materials comprises petalite having a fraction by weight of total iron, expressed as Fe₂O₃, less than or equal to 100ppm, preferably less than or equal to 50ppm,
- the fraction by weight of total iron, expressed as Fe₂O₃, in the vitrifiable mixture of raw materials is between 4ppm and 200ppm,
- said vitrifiable mixture of raw materials comprises one or more fining agents selected from SnO₂, CeO₂, MnO₂, fluorides and chlorides, and
- the fraction by weight of said petalite in said vitrifiable mixture of raw materials is at least 50%.

2. The method as claimed in claim 1, such that the mixture of vitrifiable materials is free from arsenic oxides and antimony oxides, apart from unavoidable traces.

3. The method as claimed in any one of the preceding claims, such that the refining temperature in step b is at most 1700°C, in particular at most 1600°C, preferably at most 1550°C.

4. The method as claimed in any one of the preceding claims, such that the fraction by weight of said petalite in said vitrifiable mixture of raw materials is at least 70%, in particular at least 80%, preferably at least 90%.

5. The method as claimed in any one of the preceding claims, such that said petalite comprises petalite mineral in a fraction by weight greater than or equal to 90%.

6. The method as claimed in any one of the preceding claims, such that said petalite has a fraction by weight of fluorine greater than or equal to 0.10%.

7. The method as claimed in any one of the preceding claims, such that the mixture of raw materials comprises nitrates of alkali metals or of alkaline earths in a fraction by weight of at most 4%.

8. The method as claimed in any one of the preceding claims, such that said fining agent is SnO₂, and the fraction by weight of said SnO₂ in the final glass is less than 0.5%, in particular between 0.4% and 0.1%.

9. The method as claimed in any one of the preceding claims, such that the glass obtained comprises the following constituents in the ranges defined below expressed in fractions by weight:
| | |
|---|---|
| SiO₂ | 52-75% |
| Al₂O₃ | 12-27% |
| Li₂O | 2-5.5% |
| Na₂O | 0-3%, |
| K₂O | 0-3%, |
| CaO | 0-5%, |
| MgO | 0-5%, |
| SrO | 0-5%, |
| BaO | 0-5%, |
| ZnO | 0-5%, |
| TiO₂ | 1-6%, |
| ZrO₂ | 0-3%, |
| P₂O₅ | 0-8%. |

10. The method as claimed in any one of the preceding claims, such that it further comprises a ceramizing step e).
